# EUROPEAN PATENT SPECIFICATION

(11) **EP 1 338 441 B1**
(45) Date of publication and mention of the grant of the patent: **07.06.2006**
(21) Application number: 01997401.3
(22) Date of filing: 27.11.2001
(51) Int. Cl.: B60C 17/00, B60C 9/20, B60C 9/18, B60C 9/22

(54) **PNEUMATIC SAFETY TIRE**
SICHERHEITSREIFEN
PNEU DE SECURITE

(30) Priority: 27.11.2000 JP 2000358956
(43) Date of publication of application: 27.08.2003
(73) Proprietor: Bridgestone Corporation, Tokyo 104-0031 (JP)
(72) Inventor: TSUDA, Toru, c/o BRIDGESTONE CO. Tech. Ctr., Kodaira-shi, Tokyo 187-0031 (JP); TAGAWA, Koya, c/o BRIDGESTONE CO. Tech. Ctr., Kodaira-shi, Tokyo 187-0031 (JP); MAEHARA, Daisuke, c/o BRIDGESTONE CO. Tech. Ctr., Kodaira-shi, Tokyo 187-0031 (JP); NISHIKAWA, Tomohisa, c/o BRIDGESTONE CO. Tech.Ctr., Kodaira-shi, Tokyo 187-0031 (JP)
(74) Representative: Whalley, Kevin
(86) International application number: PCT/JP2001/010339
(87) International publication number: WO 2002/042094

(56) References cited:
- EP-A- 0 613 793
- EP-A- 1 022 162
- EP-A1- 0 729 853
- WO-A-99/48710
- JP-A- 1 030 809
- JP-A- 6 255 306
- JP-A- 6 255 317
- US-A- 5 421 390
- PATENT ABSTRACTS OF JAPAN vol. 012, no. 392 (M-755), 19 October 1988 (1988-10-19) & JP 63 141809 A (YOKOHAMA RUBBER CO LTD:THE), 14 June 1988 (1988-06-14)
- PATENT ABSTRACTS OF JAPAN vol. 018, no. 245 (M-1603), 11 May 1994 (1994-05-11) & JP 06 032111 A (BRIDGESTONE CORP), 8 February 1994 (1994-02-08)

## Description

This invention relates to a pneumatic safety tire capable of continuing safe running even if an internal pressure of a tire drops to atmospheric pressure, and particularly relates to a pneumatic safety tire in which a thickness of a side reinforcing rubber layer can be decreased without difficulty in the production and there is no danger at degradation of durability due to the concentration of strain in an inside of a tire tread portion and in which the weight is light and the ride comfort is excellent.

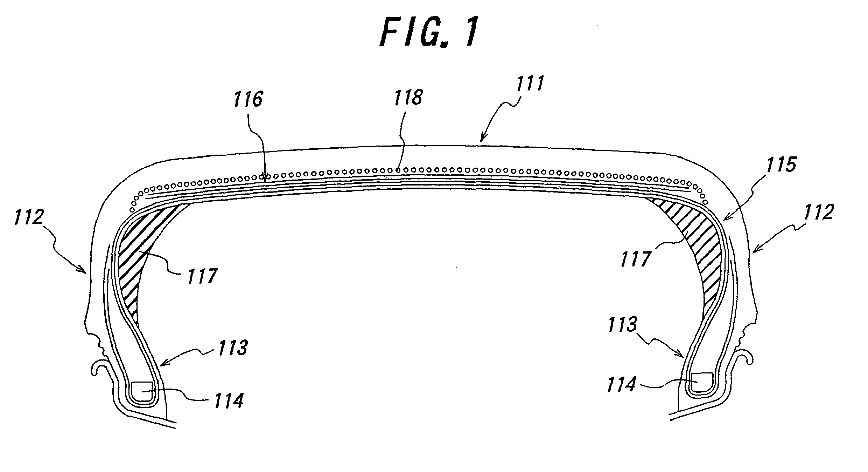

As this type of conventional pneumatic safety tire, there are tires wherein a sidewall portion 112 extending inward in a radial direction is continuously arranged on each side part of a tread portion 111 and a bead portion 113 is continuously arranged on a radially inner end of the sidewall portion 112 and a carcass 115 forming a skeleton structure of the tire is toroidally extended between the bead portions 113 and hence bead cores 114 embedded in the respective bead portions 113, and a belt 116 is arranged between a crown portion of the carcass 115 and the tread portion 111 to reinforce the tread portion 111 and a reinforcing rubber layer 117 for the sidewall portion having substantially a crescent form in section is mainly arranged on an inner face of the sidewall portion 112 as shown, for example, by a sectional view in FIG. 1.

Moreover, the whole of the belt 116 may be covered with a belt reinforcing layer 118 having a spirally winding structure of a chemical fiber cord extending substantially in the circumferential direction, if necessary.

In this safety tire, when an internal tire pressure is leaked out by a puncture or the like, a load can be supported by a flexural rigidity of the sidewall portion 112 based on the action of the side reinforcing rubber layer 117 under a relatively small crushed deformation of the tire, so that safe running can be continued over a significant distance even upon the puncture of the tire or the like.

As another conventional safety tire, JP-A-8-244422 discloses a tire wherein a small-size bead ring extending inward from the belt in the radial direction is fitted onto an outer circumference of the carcass in addition to the arrangement of the side reinforcing rubber layer as mentioned above. In this case, the load is supported by the side reinforcing rubber layer and the bead ring upon the puncture of the tire or the like.

In the former technique shown in FIG. 1, however, it is unavoidable to increase the thickness of the side reinforcing rubber layer for ensuring a high durability upon the puncture of the tire or the like, so that it is necessary to increase the tire weight and also there is a problem that the ride comfort on a vehicle lowers during the running of the tire under loading at a state of filling an internal pressure.

On the other hand, in the latter technique, there is a merit that the thickness of the side reinforcing rubber layer can be decreased as compared with the above case because the side reinforcing rubber layer and the bead ring contribute to support the load, but it is unavoidable to increase the number of working steps by separately arranging the bead ring on the outer circumferential side of the carcass in the production process of the tire and also there are problems that it is difficult to set the fitting and positioning of the bead ring onto the outer circumference of the carcass and it is necessary to increase the tire weight by the bead ring.

Furthermore, when a product tire is normally run under loading, the bead ring produces a large stepwise difference of rigidity in a widthwise direction of the tread portion and concentration of strain is caused around the bead ring, so that premature damage is generated in the tread portion by repeatedly rotating the tire under loading to degrade the durability and also there is a problem that the ground contacting area of the tread portion, specifically the contacting length of the tread surface is decreased under the restraint of the bead ring having a higher rigidity to degrade the steering stability. In addition, there are problems that since the bead ring enhances the bending or flexing rigidity of the tread portion, the enveloping property of the tread portion is degraded to increase impact vibration in the riding on a large protrusion to thereby degrade the ride comfort, and a large impact force is input to the tread portion and hence the high-rigidity bead ring to cause permanent deformation of the bead ring to thereby damage a degree of true circle in the tire.

These problems become serious because a time of normally running the tire under loading is considerably longer than a time of running under loading at the occurrence a puncture or the like.

It is, therefore, an object of the invention to provide a pneumatic safety tire wherein a function inherent to the safety tire capable of continuing safe running even if the internal tire pressure drops to atmospheric pressure can be sufficiently developed even when the thickness of the side reinforcing rubber layer is decreased and also excellent durability, steering stability and ride comfort can be obtained in the normal running of the tire under loading and also the production is easy without damaging the degree of true circle and requiring special working steps.

Attention is also drawn to the disclosure of WO99/48710 A.

The pneumatic safety tire according to the invention comprises a tread portion, a sidewall portion extending inward from each side part of the tread portion in a radial direction, a bead portion continuously arranged at a radially inner end of the sidewall portion, a carcass toroidally extending between the pair of bead portions and wound around a bead core embedded in the respective bead portion from an inside toward an outside, and a belt disposed between a crown portion of the carcass and the tread portion, in which a side reinforcing rubber layer having substantially a crescent form at a section in a widthwise direction is mainly arranged on the sidewall portion, and at least one annular depression convexly protruding inward in the radial direction and continuously extending in the circumferential direction is formed by protruding each layer of the belt, inward in the radial direction.

In this tire, the annular depression arranged on the belt serves as a reinforcing rib against crushed deformation of the tire due to leak-out of the internal pressure resulted from a puncture or the like and effectively contributes to support a load, so that the function inherent to the safety tire can be sufficiently developed even when the thickness of the side reinforcing rubber layer is decreased.

In the invention, therefore, weight reduction of the tire can effectively be attained.

Also, the annular depression of the tire can be formed at a curing process for forming through a curing mold provided on its inner peripheral face with an annular protrusion and it is not necessary to conduct special work for the formation of the annular depression at a tire building process, so that all of problems in the production of the tire can be removed.

The annular depression arranged on the belt of the safety tire has a degree of freedom in the deformation, so that the concentration of strain in the vicinity of the annular depression can effectively be mitigated by the deformation of the annular depression itself in the normal running of the tire under loading through the annular depression brings about a somewhat increase of rigidity in the widthwise direction of the tread portion and hence there is no fear of damaging the running durability. Also, the annular depression does not largely restrain the ground contacting length of the tread portion based on the deformation of the annular depression itself as compared with a high-rigidity bead ring, so that the sufficiently large ground contacting area can be always ensured to provide an excellent steering stability.

Furthermore, the deformation of the annular depression in the belt in a direction enlarging an opening port of the depression enhances the degree of freedom in the bending or flexing deformation of the tread portion in the riding of the tire over a protrusion, so that the ride comfort of the tire against vibration can effectively be improved while sufficiently ensuring the thickness of the side reinforcing rubber layer, and further the lowering of a true circle degree in the tire can sufficiently be prevented based on the deformation of the annular depression in the belt against input such as a large external impact force.

Moreover, when one or more annular depressions are arranged symmetrically with respect to a center line in the widthwise direction of the belt, a locally large deformation can effectively be prevented taking a deformation balance in the crushed deformation due to a puncture of the tire or the like.

Also, when the annular depression is arranged in a central region in the widthwise direction of the belt, the drainage performance can advantageously be improved in connection with a circumferential groove as mentioned later in addition to the aforementioned effect.

On the other hand, when a maximum thickness of the side reinforcing rubber layer as measured on a normal line drawn to a carcass line is within a range of 2-12 mm, a reduction of the rolling resistance, and further improvement of the ride comfort can be attained during the normal running of the tire while sufficiently reducing the weight of the tire.

In this case, when the maximum thickness is less than 2 mm, there is a danger of decreasing the ability of the side reinforcing rubber layer supporting the load too much, while when it exceeds 12 mm, the practical effect of reducing the weight is poor.

In such a tire, when a main circumferential groove is arranged in the tread portion at a position corresponding to the annular depression, the drainage performance can be advantageously improved. Such a drainage performance is further improved when a total groove width of the circumferential groove(s) is not less than 10% of a ground contacting width of the tread.

Preferably, when the tire is assembled onto a standard rim defined in JATMA YEAR BOOK, ETRTO STANDARD MANUAL, TRA (THE TIRE and RIM ASSOCIATION INC.) YEAR BOOK or the like and inflated under an internal pressure of 50 kPa or is at a posture state of filling an internal pressure to an extent that local deformation is not intentionally caused in the tire assembled on the rim, a radius of an inner circumferential face of the annular depression in the belt is made smaller by 5 mm or more than a maximum radius of an inner circumferential face of the belt.

In this case, the load supporting function inherent to the annular depression can sufficiently be developed upon a puncture of the tire or the like to further effectively prevent an extra deformation in the radial direction on the circumference of the belt.

More preferably, a belt reinforcing layer having a spiral winding structure of a chemical fiber cord(s) extending substantially in the circumferential direction is arranged on outer circumferential side of the belt. Particularly, the annular depression is sufficiently restrained by the belt reinforcing layer, whereby the function of the annular depression can be ensured over a long time. Also, high-speed durabilit and steering stability can be enhanced by covering substantially the whole of the belt with the belt reinforcing layer.

On the other hand, it is preferable that the circumferential groove is not arranged on the tread portion within a range of 30-70% of a tread half width from a tread center for preventing buckling at section in the widthwise direction of the tread upon a puncture of the tire or the like, or for preventing a floating phenomenon of a central part in the widthwise direction of the tread portion from the ground contact region to ensure a sufficient ground contacting area. However, if the drainage performance during the normal running of the tire requires circumferential grooves, it is preferable to arrange a circumferential sub-groove having a groove width of 0.5-5 mm, preferably not more than 3 mm within the above range.

That is, when the flexural deformation amount of the sidewall portion is increased under the action of the side reinforcing rubber layer upon a puncture of the tire or the like and the tread portion is subjected to compression force directing to a central portion side in the widthwise direction accompanied therewith to cause buckling tendency of floating up the central portion from the ground contact region, if a relatively wide-width circumferential sub-groove is existent within the range of 30-70% of the tread half width from the tread center, it is apt to easily cause a buckling accompanied with violent folding of the tread portion bordering the circumferential sub-groove, and also the folded portion itself easily forms a nucleus of fatigue breakage in the tread portion and further there is a danger that the ground contacting area of a tread shoulder portion becomes very small by a large floating of a tread side region resulted from the occurrence of the violent folding. On the contrary, when a circumferential sub-groove having a fine width of about 0.5-5 mm is arranged within the above range, it is an advantage that opposed groove walls of the sub-groove are contacted with each other by compression force acting to the tread portion to produce a drag against the floating of the tread portion and hence the occurrence of the buckling itself is effectively suppressed, and even if the buckling occurs, the floating gradient of the ground contacting region the tread from the road surface becomes small and hence a larger contacting area can be ensured.

The invention will be further described with reference to the accompanying drawings, wherein
FIG. 1 is a diagrammatically section view of a conventional tire ina widthwise direction.
FIG. 2 is a diagrammatically section view of an embodiment of the tire according to the invention in the widthwise direction.
FIG. 3 is a diagrammatically section view of another embodiment of the tire according to the invention in the widthwise direction.
FIG. 4 is a diagrammatically section view of a further embodiment of the tire according to the invention in the widthwise direction.
FIG. 5 is a schematically section view illustrating an occurrence of buckling in a widthwise direction of a tread portion.
FIG. 6 is a schematically section view illustrating an example tire and a comparative tire.

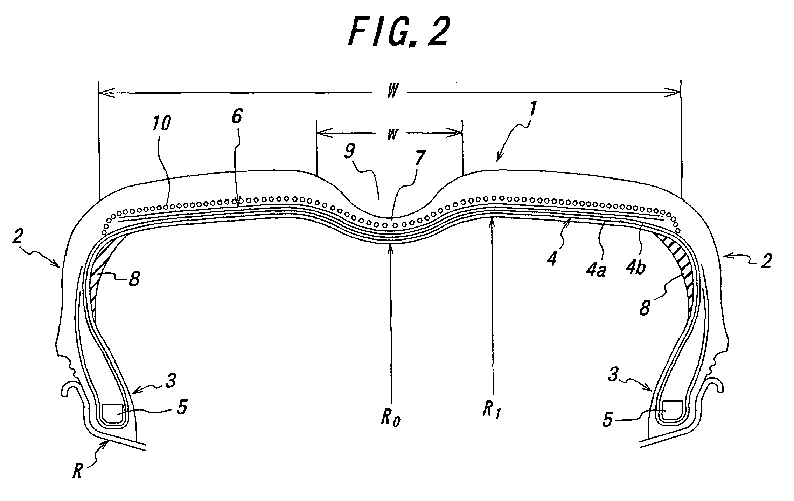

In FIG. 2 is sectionally shown an embodiment of the tire according to the invention under a posture of assembling onto a standard rim and filling an internal pressure of 50 kPa, wherein numeral 1 is a tread portion, numeral 2 a pair of sidewall portions continuously extending inward from the respective side parts of the tread portion 1 in a radial direction, and numeral 3 a bead portion continuing to an inner circumferential side of the respective sidewall portion 2.

In this case, a carcass 4 comprised of two carcass plies 4a, 4b is toroidally extended between bead cores 5 embedded in the bead portions 3, and each side portion of the carcass plies 4a, 4b is turned up around the bead core 5, while a belt 6 comprised of two belt layers, cords of which belt layers such as steel cords being crossed with each other, is arranged between a crown portion of the carcass 4 and the tread portion 1.

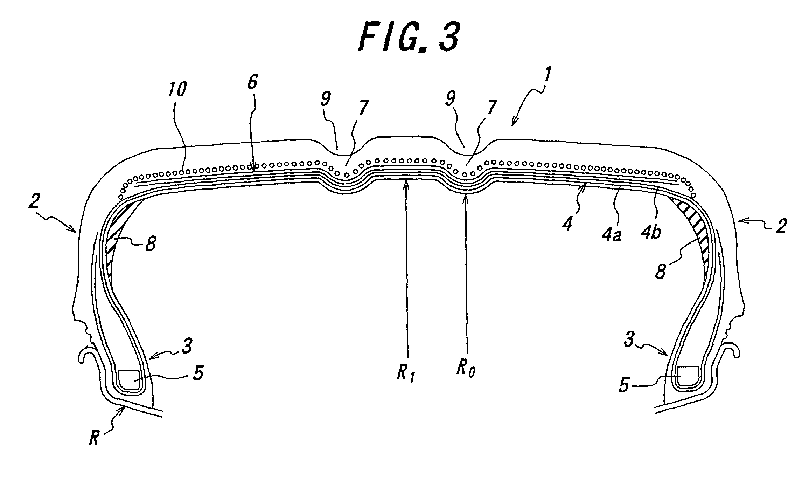

In the illustrated embodiment, one annular depression 7 convexly protruding inward in the radial direction and continuously extending in the circumferential direction is arranged at a widthwise central portion of the belt 6. Moreover, a plurality of annular depressions 7 may be formed symmetrically with respect to a widthwise center line of the belt 6 or an equatorial plane of the tire as shown in FIG. 3. Whether there are one or plural depressions, it is preferable to form such annular depression(s) 7 at the central region of the belt in the widthwise direction in connection with an embodiment of forming a circumferential main groove as mentioned later in order to ensure an excellent drainage performance.

Also, a side reinforcing rubber layer 8 having substantially a crescent shape at section is arranged on the sidewall portion 2. The side reinforcing rubber layer 8 is arranged inside an innerliner rubber layer as shown in the figure, or may be arranged outside the innerliner rubber layer or adjacent to outside of one or more carcass plies.

It is preferable that a maximum thickness of the side reinforcing rubber layer 8 is within a range of 2-12 mm.

Further, a circumferential main groove 9 continuously extending in the circumferential direction is arranged on the tread portion 1 at a position corresponding to the annular depression 7. According to this structure, the drainage performance can be improved owing to the presence of the circumferential main groove 9. Also, the circumferential main groove 9 is positioned in correspondence to the annular depression 7, whereby sufficiently large groove width and groove depth can easily be ensured. In this case, it is preferable that a total groove width w of one or more circumferential main grooves 9 is not less than 10% of a treading width W (ground contact width) of the tread.

More preferably, when the tire is assembled onto a standard rim R and inflated under an internal pressure of 50 kPa as shown in the figure, a radius of R₀ of an inner circumferential face of the annular depression in the belt is made smaller by 5 mm or more than a maximum radius R₁ of an inner circumferential face of the belt 6 to further enhance the reinforcing function of the annular depression 7. Also, it is preferable that a belt reinforcing layer 10 having a spiral winding structure of a chemical fiber cord(s) extending substantially in the circumferential direction is arranged on an outer circumferential side of the belt 6 so as to cover at least the annular depression 7, whereby it is possible to reliably develop the function and also the improvement of the high-speed durability is attained.

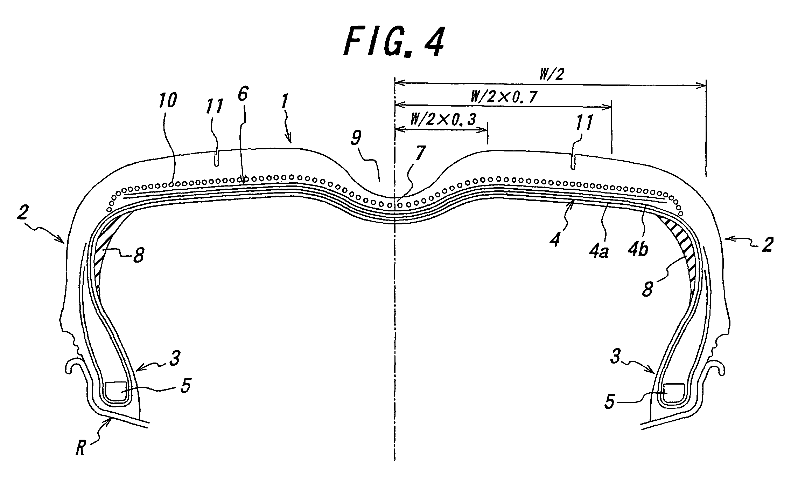

If the given drainage performance can not be ensured only by the one circumferential main groove 9 as shown in FIG. 2, it is preferable that, as shown in FIG. 4, one or more circumferential sub-grooves 11 extending straightforward or zigzag in the circumferential direction at a width of 0.5-5 mm, one circumferential sub-groove 11 in the illustrated embodiment, is arranged at substantially a central region of a half of the tread portion, or within a range of 30-70% of a tread half width from a tread center to thereby increase a negative ratio in the tread portion 1.

In this case, the groove width of the circumferential sub-groove 11 is provided in a range of 0.5-5 mm for suppressing the buckling phenomenon that the widthwise central part of the tread portion 1 floats up from a road surface upon the loss of internal tire pressure due to a puncture of the tire or the like and ensuring a larger ground contacting area in the widthwise direction of the tread.

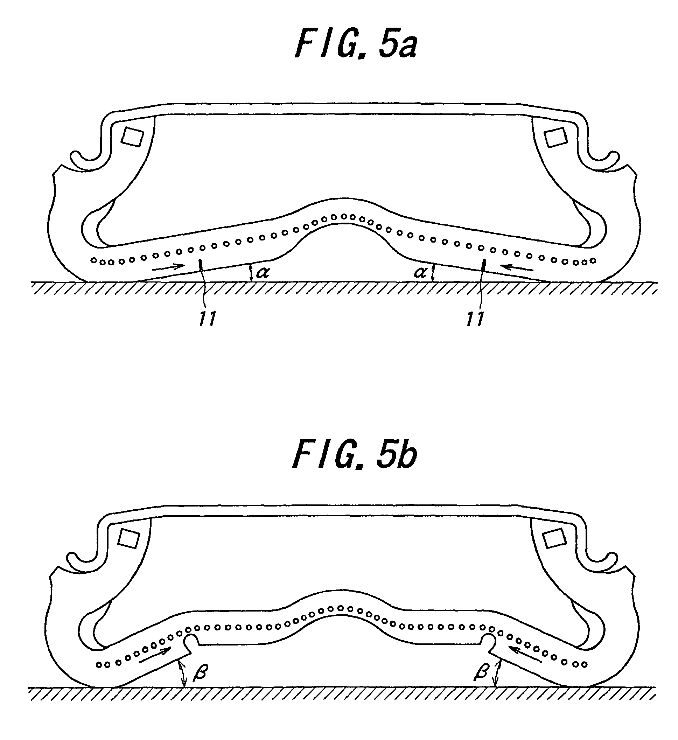

In other words, even if the buckling is caused due to the loss of the internal tire pressure as exaggeratedly shown in FIG. 5, the circumferential sub-groove 11 having a narrow groove width of 0.5-5 mm is substantially closed by an action of compression force directing to a central part side of the tread portion 1 as shown in FIG. 5a and hence a drag against the buckling is generated to control an amount of floating of the tread portion 1 from the road surface, and an inclination angle α of a side region of the tread portion with respect to the road surface to small level, whereby a relatively large ground contacting area in the tread shoulder portion can be ensured. On the other hand, when the groove width of the circumferential sub-groove exceeds 5 mm, as shown in FIG. 5b, bending deformation of the tread portion is produced at a position of the wide-width sub-groove by a similar compression force generated in the tread portion and hence the inclination angle β of the side region of the tread with respect to the road surface becomes large and the ground contacting area of the tread shoulder portion becomes small, and also a fear of liklihood of impaired steering stability and the durability becomes high because of premature fatigue of the bending deformed portion during the running of the tire under loading.

The invention will be further described with reference to one following Examples.

### Example 1

With respect to an example tire 1 having a structure shown in FIG. 2 and a maximum thickness of a side reinforcing rubber layer of 5 mm and a tire size of 245/40ZR17 are measured the run-flat durability, weight, ride comfort, resistance to hydroplaning and wear resistance to obtain results as shown in Table 1.

Moreover, conventional tires 1 and 2 in this table have the structure shown in FIG. 1 and the same tire size as described above, wherein the maximum thickness of the side reinforcing rubber layer is 10 mm and 5 mm, respectively.

Also, the evaluation is conducted by showing the measured value of the conventional tire 1 as a control.

Now, the run-flat durability is determined by assembling a test tire onto a rim of 8.5Jx17, feeding an internal pressure to fit onto the rim, removing a valve core to render an internal tire pressure into atmospheric pressure, mounting onto a right rear wheel of a vehicle (air pressure specified by the vehicle in tires mounted on the remaining three wheels), and running at a speed of 80 km/h under a load corresponding to total weight of two crewmen to measure a running distance until the side reinforcing rubber layer of the test tire is broken to detect occurrence of abnormal sound and occurrence of abnormal vibration.

Also, the ride comfort during running on good road and bad road at a state of filling an air pressure specified by the vehicle is determined by scoring every 0.5 point at full points of 10 by a professional driver in an actual running test. The resistance to hydroplaning is determined by a magnification of lateral acceleration speed when a speed is increased from 50 km/h every 5 km/h on a test course having a water depth of 6 mm and a radius of 100 m.

The wear resistance is determined by measuring a worn amount of a tread rubber after the test tire is actually run over 20000 km.

**Table 1**

| | Run-flat durability | Weight | Ride comfort | Resistance to hydroplaning | Wear resistance |
|---|---|---|---|---|---|
| Conventional tire 1 | 100 | 100 | 100 | 100 | 100 |
| Example tire 1 | ≥ 100 | weight of reduction of 10-20% | 1 rank up | 1 rank up | improvement of 10-20% |
| Conventional tire 2 | 30 | weight reduction of 10-20% | 1 rank up | 100 | 100 |

As seen from Table 1, the example tire 1 is superior to the conventional tires in all of the performances.

### Example 2

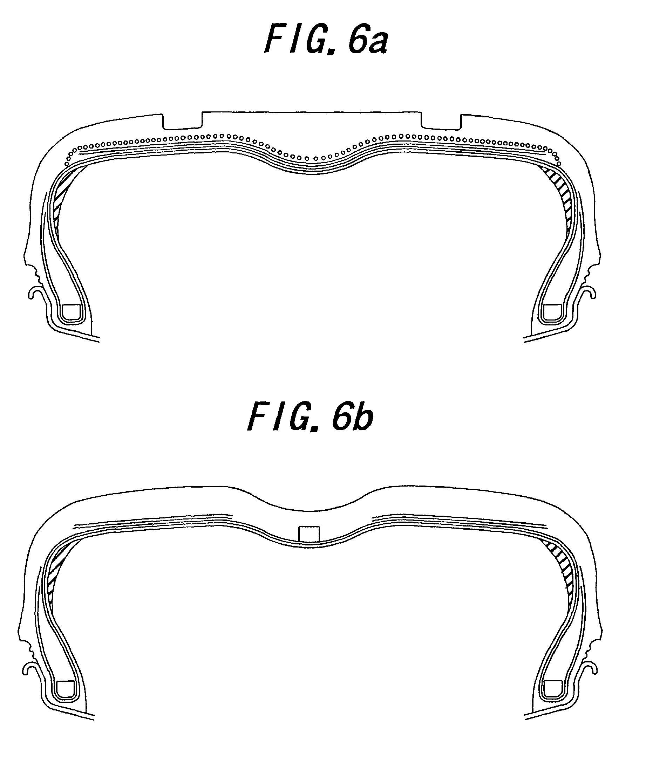

With respect to each of example tires 2 and 3 having the same tire size and structure as in the example tire 1 and example tire 4 having the same size and a structure of circumferential main groove as shown in FIG. 6a are measured the run-flat durability, weight, ride comfort and wet performance to obtain results as shown in Table 2.

A conventional tire 3 in this table has a structure shown in FIG. 1, and a comparative tire has a structure that a bead ring is arranged in a central part on a crown region of a carcass and belt layers are arranged on both side portions of the bead ring.

The run-flat durability and ride comfort are determined in the same manner as described above, and the wet performance is determined by measuring a stopping distance in the braking from a speed of 50 km/h on an asphalt road surface having a water depth of 3 mm and evaluated as a reciprocate of a ratio of the distance when the conventional example is 100.

Moreover, the larger the index value in the performances of the table other than the weight, the better the result.

**Table 2**

| | Conventional tire 3 | Example tire 2 | Example tire 3 | Example tire 4 | Comparative tire |
|---|---|---|---|---|---|
| Maximum thickness of side reinforcing rubber layer | 7 (mm) | 7 (mm) | 4 (mm) | 7 (mm) | 7 (mm) |
| Negative ratio (index) | 100 | 120 | 120 | 100 | 100 |
| Run-flat durability (index) | 100 | 150 | 100 | 140 | 160 |
| Weight (index) | 100 | 100 | 90 | 105 | 120 |
| Ride comfort (index) | 100 | 110 | 130 | 107 | 70 |
| Wet performance (index) | 100 | 110 | 110 | 100 | 105 |

As seen from the above table, all of the example tires 2-4 control the tire weight to a sufficiently small level and can develop an excellent run-flat durability without degrading the ride comfort.

As seen from the above, the pneumatic safety tire according to the invention can easily be produced without requiring special working steps and increasing the weight, and also sufficient running durability can be developed during running under loading upon loss of internal tire pressure, and excellent durability, steering stability and ride comfort can be attained during the normal running of the tire under loading and further there is no danger of damaging the degree of true circle in the tire.

## Claims

1. A pneumatic safety tire comprising a tread portion (1), a sidewall portion (2) extending inward from each side part of the tread portion in a radial direction, a bead portion (3) continuously arranged at a radially inner end of the sidewall portion, a carcass (4) toroidally extending between the pair of bead portions and wound around a bead core (5) embedded in the respective bead portion from an inside toward an outside, and a belt (6) disposed between a crown portion of the carcass and the tread portion, in which a side reinforcing rubber layer (8) having substantially a crescent form at a section in a widthwise direction is mainly arranged on the sidewall portion (2), and **characterized in that** at least one annular depression (7) convexly protruding inward in the radial direction and continuously extending in the circumferential direction is formed by protruding each layer of the belt (6) inward in the radial direction.

2. A pneumatic safety tire as claimed in claim 1,**characterized in that** the annular depression(s) (7) is arranged symmetrically with respect to a center line in a widthwise direction of the belt (6).

3. A pneumatic safety tire as claimed in claim 1 or 2, **characterized in that** the annular depression (7) is arranged at a widthwise central part of the belt (6).

4. A pneumatic safety tire as claimed in any of claims 1to 3, **characterized in that** the side reinforcing rubber layer(8) has a maximum thickness of 2-12 mm.

5. A pneumatic safety tire as claimed in any of claims 1to 4, **characterized in that** a circumferential main groove(s) (9) is arranged at the tread portion (1) at a position corresponding to the annular depression(s) (7).

6. A pneumatic safety tire as claimed in claim 5, **characterized in that** a total width (w) of the circumferential main groove(s) (9) is not less than 10% of a ground contacting width (W) of the tread.

7. A pneumatic safety tire as claimed in any of claims 1 to 6, **characterized in that** a radius (R₀) of an inner circumferential face of the annular depression (7) in the belt (6) at a posture of assembling onto a standard rim and filling an internal pressure of 50 kPa is made smaller than a maximum radius (R₁) of an inner circumferential face of the belt (6).

8. A pneumatic safety tire as claimed in any of claims 1to 7, **characterized in that** a belt reinforcing layer (10) having a spiral winding structure of a cord extending substantially in the circumferential direction is arranged on an outer circumferential side of the belt (6).

9. A pneumatic safety tire as claimed in any of claims 1 to 8, **characterized in that** a circumferential sub-groove (11) is arranged on the tread portion (1) at a position corresponding to 30-70% of a tread half width from a tread center with a groove width of 0.5-5 mm.

## Patentansprüche

1. Sicherheitsluftreifen, umfassend: einen Laufflächenteil (1); einen Seitenwandteil (2), der sich von jedem Seitenteil des Laufflächenteils aus in einer Radialrichtung nach innen erstreckt; einen Wulstteil (3), der an einem in Radialrichtung inneren Ende des Seitenwandteils durchgängig angeordnet ist; eine Karkasse (4), die sich zwischen dem Paar von Wulstteilen torusförmig erstreckt und um einen Wulstkern (5), der in dem jeweiligen Wulstteil von einer Innenseite aus zu einer Außenseite hin eingebettet ist, gewickelt ist; und ein Gürtel (6), der zwischen einem balligen Teil der Karkasse und des Laufflächenteils angeordnet ist, in dem eine Seitenverstärkungs-Gummischicht (8), die an einem Abschnitt in einer Richtung der Breite im Wesentlichen eine Sichelform aufweist, hauptsächlich am Seitenwandteil (2) angeordnet ist; **dadurch gekennzeichnet, dass** mindestens eine ringförmige Vertiefung (7), die in der Radialrichtung konvex nach innen hervorsteht und sich in der Umfangsrichtung durchgängig erstreckt, **dadurch** geformt ist, dass jede Schicht des Gürtels (6) in der Radialrichtung nach innen hervorsteht.

2. Sicherheitsluftreifen nach Anspruch 1, **dadurch gekennzeichnet, dass** die ringförmige(n) Vertiefung(en) (7) in Bezug auf eine Mittellinie hinsichtlich einer Richtung der Breite des Gürtels (6) symmetrisch angeordnet ist (sind).

3. Sicherheitsluftreifen nach Anspruch 1 oder 2, **dadurch gekennzeichnet, dass** die ringförmige Vertiefung (7) an einem in der Richtung der Breite mittigen Teil des Gürtels (6) angeordnet ist.

4. Sicherheitsluftreifen nach einem der Ansprüche 1 bis 3, **dadurch gekennzeichnet, dass** die Seitenverstärkungs-Gummischicht (8) eine maximale Dicke von 2-12 mm aufweist.

5. Sicherheitsluftreifen nach einem der Ansprüche 1 bis 4, **dadurch gekennzeichnet, dass** eine (mehrere) Umfangshauptnut(en) (9) am Laufflächenteil (1) an einer Position (Positionen) angeordnet ist (sind), die mit der (denen) der ringförmigen Vertiefung(en) (7) übereinstimmt (übereinstimmen).

6. Sicherheitsluftreifen nach Anspruch 5, **dadurch gekennzeichnet, dass** eine Gesamtbreite (w) der Hauptumfangsnut(en) (9) kleiner als 10% einer Bodenkontaktbreite (W) der Lauffläche ist.

7. Sicherheitsluftreifen nach einem der Ansprüche 1 bis 6, **dadurch gekennzeichnet, dass** ein Radius (R₀) einer inneren Umfangsfläche der ringförmigen Vertiefung (7) im Gürtel (6) in einer Stellung für die Montage auf eine Standardfelge und für das Füllen auf einen Innendruck von 50 kPa kleiner ausgeführt ist als ein maximaler Radius (R₁) einer inneren Umfangsfläche des Gürtels (6).

8. Sicherheitsluftreifen nach einem der Ansprüche 1 bis 7, **dadurch gekennzeichnet, dass** eine Gürtelverstärkungsschicht (10), die einen Spiralwicklungsaufbau eines Cords aufweist, der sich im Wesentlichen in der Umfangsrichtung erstreckt, an einer äußeren Umfangsseite des Gürtels (6) angeordnet ist.

9. Sicherheitsluftreifen nach einem der Ansprüche 1 bis 8, **dadurch gekennzeichnet, dass** eine Subumfangsnut (11) mit einer Nutbreite von 0,5-5 mm am Laufflächenteil (1) an einer Position angeordnet ist, die von einer Laufflächenmittellinie aus 30-70% der Breite einer Laufflächenhälfte entspricht.

## Revendications

1. Bandage pneumatique de sécurité comprenant une partie de bande de roulement (1), une partie de flanc (2) s'étendant vers l'intérieur à partir de chaque partie latérale dans la direction radiale, une partie de talon (3) agencée de manière continue au niveau de l'extrémité radialement intérieure de la partie de flanc, une carcasse (4) s'étendant toroïdalement entre la paire de parties de talon et enroulée autour d'une tringle (5) enrobée dans la partie de talon respective à partir de l'intérieur vers l'extérieur, et une ceinture (6) disposée entre une partie de couronne de la carcasse et la partie de bande de roulement, dans lequel une couche de caoutchouc de renforcement latéral (8) possédant sensiblement une forme de croissant au niveau de la section dans la direction de la largeur est principalement agencée sur la partie de flanc (2), et **caractérisé en ce que** au moins une dépression annulaire (7) faisant saillie de manière convexe vers l'intérieur dans la direction radiale et s'étendant de manière continue dans la direction circonférentielle est formée en faisant saillir chaque couche de ceinture (6) vers l'intérieur dans la direction radiale.

2. Bandage pneumatique de sécurité selon la revendication 1, **caractérisé en ce que** la(les) dépression(s) annulaire(s) (7) est(sont) agencée(s) de manière symétrique par rapport à la ligne centrale dans la direction de la largeur de la ceinture (6).

3. Bandage pneumatique de sécurité selon la revendication 1 ou 2, **caractérisé en ce que** la dépression annulaire (7) est agencée au niveau de la partie centrale dans le sens de la largeur de la ceinture (6).

4. Bandage pneumatique de sécurité selon l'une quelconque des revendications 1 à 3, **caractérisé en ce que** la nappe de caoutchouc de renforcement latéral (8) possède une épaisseur maximale de 2-12 mm.

5. Bandage pneumatique de sécurité selon l'une quelconque des revendications 1 à 4, **caractérisé en ce qu'**une (des) rainure(s) circonférentielle(s) principale(s) (9) est(sont) agencée(s) au niveau de la partie de bande de roulement (1) en une position correspondant à la (aux) dépression(s) annulaire(s) (7).

6. Bandage pneumatique de sécurité selon la revendication 5, **caractérisé en ce que** la largeur totale (w) de la (des) rainure(s) principale(s) circonférentielle(s) (9) n'est pas inférieure à 10% de la largeur de contact au sol (W) de la bande de roulement.

7. Bandage pneumatique de sécurité selon l'une quelconque des revendications 1 à 6, **caractérisé en ce que** le rayon (R₀) de la face circonférentielle intérieure de la dépression annulaire (7) dans la ceinture (6) dans une position de montage sur une jante standard et de remplissage à une pression interne de 50 kPa est rendu plus petit que le rayon maximum (R₁) de la face circonférentielle intérieure de la ceinture (6).

8. Bandage pneumatique de sécurité selon l'une quelconque des revendications 1 à 7, **caractérisé en ce que** la nappe de renforcement de ceinture (10) possédant une structure à enroulement en spirale d'une corde s'étendant sensiblement dans la direction circonférentielle est agencée sur le côté circonférentiel extérieur de la ceinture (6).

9. Bandage pneumatique de sécurité selon l'une quelconque des revendications 1 à 8, **caractérisé en ce que** la sous rainure circonférentielle (11) est agencée sur la partie de bande de roulement (1) en une position correspondant à 30-70% de la demi largeur de bande de roulement à partir du centre de la bande de roulement avec une largeur de rainure de 0,5-5 mm.
